Europäisches Patentamt

European Patent Office

Office européen des brevets

(19)

(11) **EP 1 282 978 B1**

(12) ## EUROPEAN PATENT SPECIFICATION

(45) Date of publication and mention
of the grant of the patent:
**12.10.2005 Bulletin 2005/41**

(21) Application number: **01932772.5**

(22) Date of filing: **30.04.2001**

(51) Int Cl.7: **H04M 9/08**

(86) International application number:
**PCT/US2001/013910**

(87) International publication number:
**WO 2001/089184 (22.11.2001 Gazette 2001/47)**

(54) **NOISE-ADAPTIVE COMMUNICATIONS SIGNAL GAIN**

GERAUSCH-ADAPTIVE KOMMUNIKATIONSIGNALPEGELREGELUNG

GAIN DE SIGNAL DE COMMUNICATION POUVANT ETRE ADAPTE AU BRUIT

(84) Designated Contracting States:
**AT BE CH CY DE DK ES FI FR GB GR IE IT LI LU MC NL PT SE TR**

(30) Priority: **18.05.2000 US 574139**

(43) Date of publication of application:
**12.02.2003 Bulletin 2003/07**

(73) Proprietor: **Ericsson Inc.**
**Plano, TX 75024 (US)**

(72) Inventors:
• **DENT, Paul, W.**
**Pittsboro, NC 27312 (US)**
• **ROMESBURG, Eric, Douglas**
**Chapel Hill, NC 27516 (US)**

(74) Representative:
**Lundqvist, Alida Maria Therése et al**
**Dr. Ludwig Brann Patentbyra AB,**
**P.O. Box 171 92**
**104 62 Stockholm (SE)**

(56) References cited:
**EP-A- 0 739 123      WO-A-98/33311**
**WO-A-99/05840**

• **SCALART P ET AL: "A system for speech enhancement in the context of hands-free radiotelephony with combined noise reduction and acoustic echo cancellation" SPEECH COMMUNICATION, ELSEVIER SCIENCE PUBLISHERS, AMSTERDAM, NL, vol. 20, no. 3, 1 December 1996 (1996-12-01), pages 203-214, XP004016545 ISSN: 0167-6393**

EP 1 282 978 B1

**Description**

BACKGROUND OF THE INVENTION

The present invention relates to control of transmit signal gain in communications devices, and more particularly to control of a transmit signal gain based on local background noise.

People have a natural and understandable tendency to speak louder in the presence of high levels of ambient noise. This tendency is termed the Lombard effect, and is well known in the communications art. When two people share the same environment and converse directly, the Lombard effect may not be noticed because both people are experiencing the same level of ambient noise. However, modem communications systems allow remote parties to converse with one another, with the net result that one party may experience a significantly different ambient noise level than the other party. For example, the user of a hands-free mobile communications device may experience significant ambient noise associated with driving and/or operating a moving vehicle. As road or traffic noise increases, this local user will likely increase the volume of their voice in response. To a remote user engaged in conversation with the local user, the increased speaking volume may seem unnatural, or even unpleasant, because they are not experiencing the same level of ambient noise.

Several approaches have been proposed that attempt to regulate the apparent volume of a local user's voice, as perceived by remote listener, over changing conditions of local background noise. One relatively unsophisticated, but common, approach simply ties microphone gain adjustments to a loudspeaker volume control. In these systems, the microphone used to receive voice signals from the local user has a gain adjustment feature that varies microphone gain as a function of loudspeaker volume setting. In principle, the local user increases the loudspeaker volume in response to increasing ambient noise. These simple systems assume that that the local user increases the volume of their voice to compensate for the high level of background noise. In other words, systems of this type infer that the local user speaks increasingly louder with increasing loudspeaker volume setting. Based on this inference, systems of this type proportionately decrease microphone input signal gain with increasing loudspeaker volume. Compensation of this type has several obvious disadvantages, including the tendency for local users to leave loudspeaker volume adjusted upwards even when local background noise subsides. Thus, systems that base microphone gain on local user-adjusted loudspeaker volume may produce undesirable results in situations where the loudspeaker setting is inappropriate for actual local background noise conditions.

German patent DE 3426815 A1 details a more sophisticated approach for controlling microphone gain as a function of local background noise. In this system, a microcontroller or signal processor provides a control signal to a digital attenuator that operates on the microphone input signal. The microcontroller adjusts this control signal based on noise in the microphone input signal. In response to increasing noise in the microphone input signal, the German system provides progressively increasing input signal attenuation. Additionally, the German Patent discloses increasing loudspeaker output signal gain proportionately in response to decreasing microphone input signal gain. The approach of the German patent is vulnerable to incorrect or compromised operation because of its failure to compensate independent of echo signal components in the microphone input signal. In particular, the system defined in the German Patent makes no provision for echo control; thus, reproduced audio signals from the remote user may couple from the local loudspeaker into the local microphone input and be mistaken for local background noise.

WO 98/33311 shows an apparatus and a method for a non-linear processor used in echo cancellation that eliminates a comfort noise source and instead inputs a control signal directly into a noise suppression system.

Thus, while past systems have attempted to regulate the apparent volume of a local user's voice, as perceived by remote listener, over changing conditions of local background noise, such systems have been found lacking. Accordingly, there remains a need for communications device that automatically compensates its transmit signal for varying levels of local user speech volume, based on estimated local background noise levels that are compensated for echo components.

SUMMARY

The present invention provides a method and apparatus for adjusting the transmit signal gain of a communications device, such as a wireless communications mobile terminal or hands-free communications system, based on the background noise level of the environment in which the communications device is operated. Such adjustments minimize undesirable variations in received speech volume for a remote listener that ordinarily result from a local user of the communications device talking more loudly in the presence of high levels of local background noise.

In operation, the communications device receives local audio input via a microphone or other audio sound transducer and produces local audio output at an audio transducer (e.g., loudspeaker) based on signals received from a remote communications device. The local audio input to the communications device of the present invention may be considered as having local components comprising local user speech and local background noise, as well as remote components comprising reproduced remote speech and noise - these remote components referred to as "echo signals."

The communications device of the present invention makes transmit signal gain adjustments to the input received at the microphone based on estimated local background noise levels. However, unlike communications devices of the prior art, the present invention allows the communications device to avoid making inappropriate transmit signal gain adjustments by employing echo suppression to remove remote components from the local audio signal, thereby compensating the local audio signal for remote noise and remote speech components. This approach allows background noise estimates to be based on local background noise, rather than local background noise plus reproduced remote noise and speech components. While the transmit signal gain may be adjusted before or after echo cancellation, performing echo cancellation after signal gain adjustment allows the echo canceller to operate with a more consistent input signal level, which may improve its performance.

Transmit signal gain adjustments might become obtrusive absent precautionary measures. In light of this consideration, the present invention may optionally employ a progressive gain adjustment method in which transmit signal gain is repeatedly adjusted upwards or downward in small increments until the desired level of gain is achieved. For example, the communications device of the present invention may adjust transmit signal gain by +/- 0.4 dB every twenty ms until the desired gain level is achieved. Alternatively, the communications device may apply significant hysteresis between the noise level at which the gain is reduced and the noise level at which it is increased to improve gain adjustment control response.

In an optional aspect, the communications device of the present invention may include receive signal gain adjustment capability tied to the transmit signal gain so that receive signal gain may be adjusted in tandem with transmit signal gain. Optionally, adjustments to receive signal gain are made in inverse proportion to transmit signal gain adjustments. In so doing, the communications device of the present invention maintains a relatively fixed overall loop gain. Of course, such complementary gain adjustments need not be directly proportional, and the receive signal gain may be oppositely adjusted as a function of the transmit signal gain based on a fractional proportion, or otherwise. When the product of the received and transmit signal gains (e.g., local echo loop gain) is not maintained at a constant value however, a compensating gain may be adjusted at an echo canceller input so that the echo canceller operates with constant local echo loop gain.

BRIEF DESCRIPTION OF THE DRAWINGS

**Figure 1** shows a general overview of a communications system in which the present invention may be used.
**Figure 2** shows the details of one exemplary wireless communications mobile terminal incorporating the present invention.
**Figure 3** shows one embodiment of a transmit signal path for the mobile terminal of Figure 2 in greater detail.
**Figure 4** shows another embodiment of a transmit signal path for the mobile terminal of Figure 2 in greater detail.
**Figure 5** shows yet another embodiment of a transmit signal path for the mobile terminal of Figure 2 in greater detail.
**Figure 6** shows still another embodiment of a transmit signal path for the mobile terminal of Figure 2 in greater detail.
**Figure 7** shows the process flow of one embodiment of the present invention.
**Figure 8** shows the process flow of another one embodiment of the present invention with greater hysteresis protection.
**Figure 9** shows another embodiment of a transmit signal path for the mobile terminal of Figure 2 in greater detail.

DETAILED DESCRIPTION OF THE INVENTION

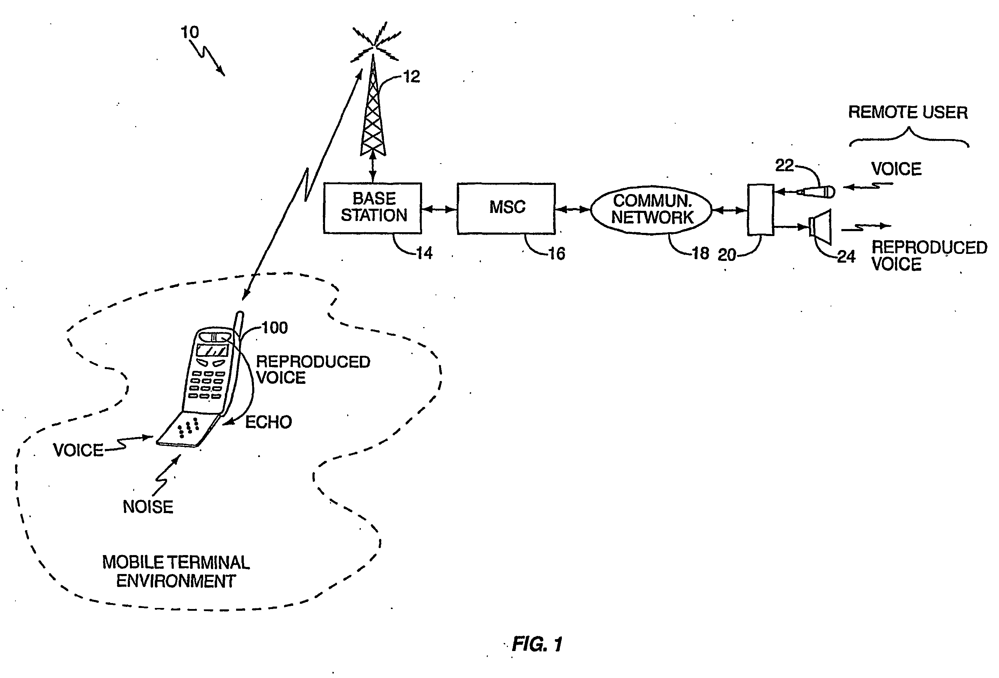

Figure 1 illustrates a communications system 10 in which a mobile terminal 100 may advantageously incorporate an exemplary embodiment of the present invention. The noise-adaptive microphone gain provided by the present invention allows a remote user to receive a more consistent and well-controlled voice signal from a user of mobile terminal 100, even while the mobile terminal user raises and lowers the volume of his/her voice in response to changing ambient noise conditions. Note that while Figure 1 depicts mobile terminal 100 as a handheld radio telephone (e.g., a cellular telephone), the present invention is equally applicable to hands-free mobile communications devices, such as hands-free adapters for cellular telephones as might be installed in an automobile, as well as to a wide variety of other communications devices.

Communications system 10 includes the mobile terminal 100, a communications tower 12 and associated base station 14, a mobile switching center (MSC) 16, a communications network interface 18, and a remote communications device 20. With respect to the discussion herein, remote communications device 20 may be a conventional telephone handset, a wireless communications device, or any other type of communications device capable of providing voice communications with a distant party:

Wireless signals transmitted by mobile terminal 100 are received by base station 14 through its associated communications tower 12. These wireless signals include encoded voice information from the user of mobile terminal 100. This voice information is transferred to mobile switching center (MSC) 16, then through communications network interface 18 to the remote communications device 20. Remote communications device 20 reproduces these received voice signals via loudspeaker 24. Remote communications device 20 receives voice input from the remote user via microphone 22. Remote communications device 20 transmit signals representative of the remote user's voice through communications network interface 18, MSC 16, base station 14, to communications tower 12 for transmission to mobile terminal 100. Mobile terminal 100 receives and processes these signals to generate an audio output signal, which is output on a loudspeaker 168 included in mobile terminal 100.

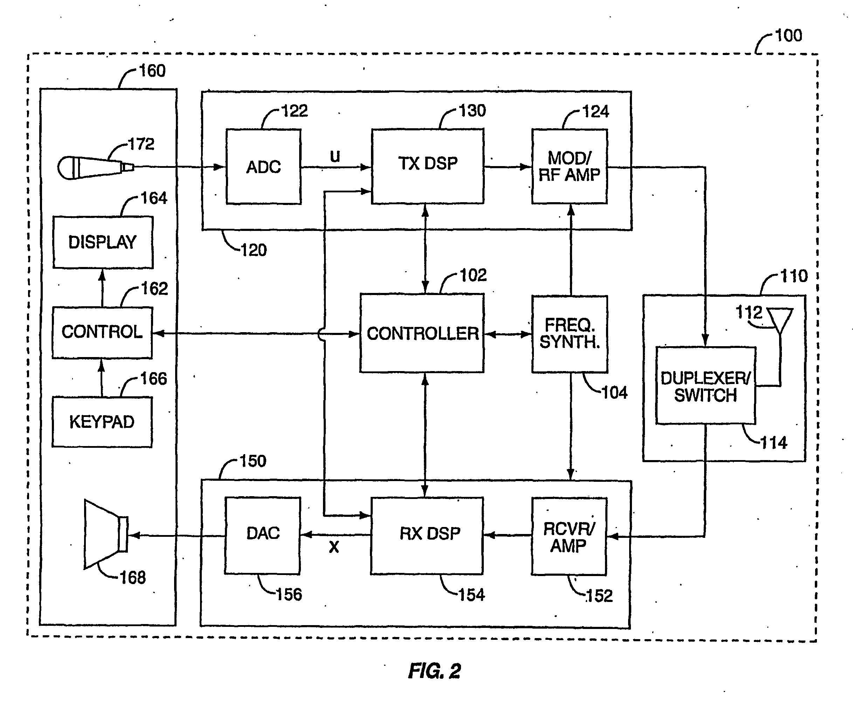

A functional overview of mobile terminal 100 may facilitate understanding the present invention; as such, Figure 2 shows one embodiment of a wireless communications mobile terminal 100 that employs the present invention. While Figure 2 illustrates one exemplary mobile terminal 100, the present invention may be practiced in a wide variety of communications device architectures. Thus, the present invention is not limited to only the embodiment of Figure 2 and the design and implementation details of Figure 2 not directly associated with the present invention are not critical and should not be considered limiting.

Referring to Figure 2, mobile terminal 100 includes an operator interface 160, a controller 102, a frequency synthesizer 104, a transmitter 120, a receiver 150, and an antenna assembly 110. Operator interface 160 typically includes a display 164, a keypad 166, a microphone or other suitable audio transducer 172, a loudspeaker or other suitable audio transducer 168, and an interface controller 162. The display 164 allows an operator to dial digits, monitor call status, and view other service information. Keypad 166 allows the operator to dial numbers, enter commands, and select various options. The interface controller 162 interfaces the display 164 and keypad 166 with the controller 102. Microphone 172 receives acoustic signals (voice) from the mobile terminal user and converts them to an audio input signal. Loudspeaker 168 converts an audio output signal produced by the receiver into an audible signal representative of sounds (voice and noise) from the remote communications device 20. The audio input signal includes signal components representative of the mobile terminal user's voice, the local background noise (ambient noise), and an echo component resulting from the remote audio reproduction output by loudspeaker 168.

The audio input signal from microphone 172 is supplied to transmitter 120, where it is processed to form a transmit signal which is transmitted to communications tower 12, via antenna assembly 110. The transmitter 120 includes an analog-to-digital converter (ADC) 122, a digital signal processor (DSP) 130, and a modutator/RF amplifier 124. The ADC 122 converts the audio input signal from an analog form to a digital form, with the digital form essentially comprising an array of digital values corresponding to the analog signal. An amplifier (not shown) disposed before ADC 122 may buffer and/or amplify the analog audio input signal before conversion by ADC 122.

Transmitter DSP 130 receives the digital audio input signal from ADC 122. In cooperation with controller 102, transmitter DSP 130 processes the digital audio input signal for transmission by modulator/RF amplifier 124. Modulator/RF amplifier 124 transmits at a carrier frequency derived from a signal output by frequency synthesizer 104, with the specific carrier frequency based on current communication channel assignments. Transmitter DSP 130 typically includes a speech coder and channel coder (not shown) for processing the digitized audio input signal to prepare it for transmission. The speech coder compresses the digital signal and the channel coder inserts error detection, error correction, and signaling information in accordance with requirements of the communications system 10 in which the mobile terminal 100 is used. In an exemplary embodiment, transmitter DSP 130 functionally incorporates the noise-adaptive microphone gain of the present invention, as will be more fully detailed herein. Thus, in an exemplary embodiment of the present invention, transmitter DSP 130 operates on the audio input signal (in either analog or digital format) to adjust the transmit signal gain based on estimating local background noise for the ambient environment in which mobile terminal 100 operates. The modulator/RF amplifier 124 converts the output from transmitter DSP 130 into a signal suitable for transmission by antenna assembly 110.

Antenna assembly 110 includes a duplexer/switch 114 and antenna 112 for receiving and transmitting wireless signals in a manner well known in the art.

Receiver 150 includes a receiver/amplifier 152, a receiver DSP 154, and a digital-to-analog converter (DAC) 156. Signals received through the antenna assembly 110 are passed to the receiver/amplifier 152, which shifts the frequency spectrum of the received RF signals and amplifies them to a level appropriate for subsequent processing by the receiver DSP 154. Frequency synthesizer 104 typically provides receiver/amplifier 152 with an injection signal having a frequency related to current communications channel assignments for downconverting the received RF signals. Receiver DSP 154 usually includes an equalizer to compensate for phase and amplitude distortions in the channel-corrupted signal, a demodulator for extracting bit sequences from the received signal, and a detector for determining transmitted bits based on the extracted sequences (not shown). A channel decoder checks for channel errors in the received signal. The channel decoder includes logic for separating control and signaling data from speech data (not shown). Control and signaling data passes to the controller 102 while speech data passes to a speech decoder (not shown) for processing.

Speech decoding produces an audio output signal, which is converted from digital format to analog format by DAC 156. The analog audio output signal drives loudspeaker 168 to produce an audible output (e.g., voice) from the remote user. An audio output amplifier may be disposed between the analog output of DAC 156 and loudspeaker 168 for buffering and/or amplifying the analog audio output signal before it is input to loudspeaker 168.

In an exemplary embodiment, receiver 150 cooperates with transmitter DSP 130 to control the gain of the audio output signal (in either digital or analog format) to adjust the received signal gain in conjunction with the aforementioned transmit signal gain adjustments. An exemplary embodiment of the present invention contemplates 0 to -6 dB of gain adjustment for the transmit signal, and 0 to +6 dB of gain adjustment for the receive signal. For example, and as described more fully below, the transmit signal may be adjusted six dB according to the formula:

$$T_x \text{ Gain} = \left[1 + \min\left(1, \sqrt{\frac{NoiseEnergy}{NoiseLimit}}\right)\right]^{-1}$$

and the receive signal may be trimmed according to the formula:

$$\text{volume trim} = \left[1 + \min\left(1, \sqrt{\frac{NoiseEnergy}{NoiseLimit}}\right)\right]$$

More particular details regarding such transmit and receive signal gain adjustments are provided subsequently herein.

The controller 102 coordinates the operation of the transmitter 120 and the receiver 150, and may, for instance, take the form of a typical microprocessor. This microprocessor may be a dedicated or shared microprocessor, a single processor or multiple, parallel processors, as needed or desired. Coordination of the receiver 150 and transmitter 120 includes coordinating power control, channel selection, and timing, as well as a host of other functions known in the art. In some embodiments of the present invention, the controller 102 may participate in adjusting one or both transmit and receive signal gains. For example, controller 102 may provide output control signals to analog gain control circuitry, as further detailed later herein. The controller 102 inserts signaling messages into the transmitted signals and extracts signaling messages from the received signals. The controller 102 responds to any base station commands contained in the extracted signaling messages, including communications channel reassignments, and implements user commands. When the user enters commands via the keypad 166, interface controller 162 transfers them to the controller 102 for action.

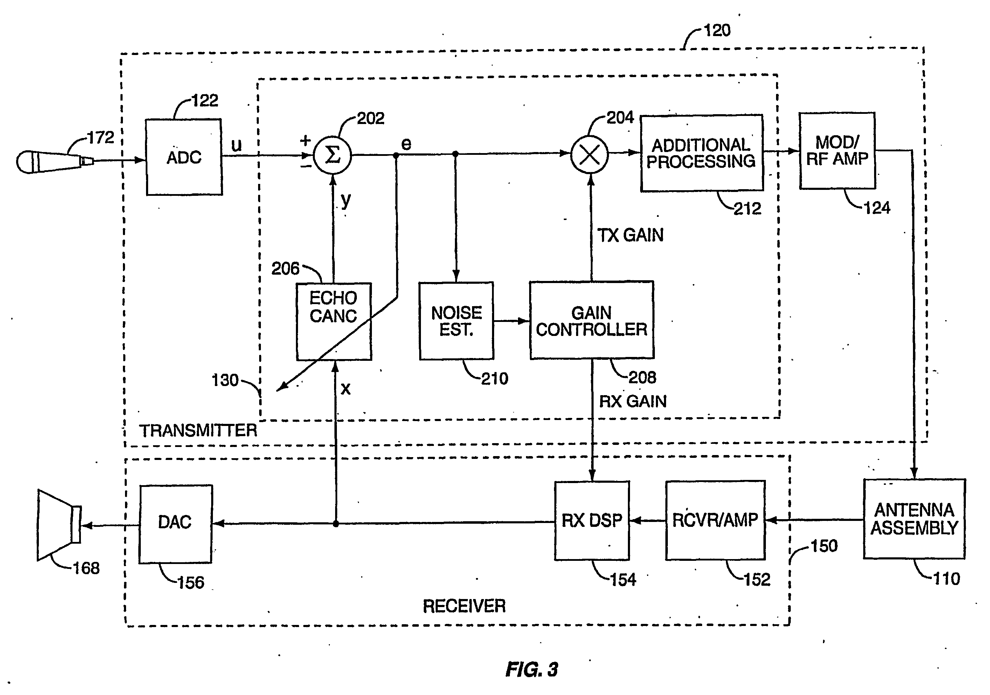

Referring to Figure 3, transmitter DSP 130 includes a summing circuit 202, a linear echo canceller (LEC) 206, a noise estimator 210, a gain controller 208, a scaling circuit 204, and an additional processing block 212. ADC 122 digitizes the analog audio input signal from microphone 172, forming the digitized audio input signal $u$. The audible signal output from loudspeaker 168 undesirably couples into the audio input signal as an echo signal via microphone 172. LEC 206 functions as an adaptive digital filter to produce an estimate of this echo signal, called the estimated-echo signal $y$, based on processing the digital audio output signal $x$. As noted, receiver DSP 154 generates this audio output signal $x$ based on decoding received wireless signals. It will be noted also that the gain control applied by receiver DSP 154 and scaling circuit 204 occur before and after LEC 206, respectively, so that the local echo loop gain between speaker 168 and microphone 172 is unaffected by gain changes in this configuration;

Summing circuit 202 operates to remove the estimated-echo signal $y$ from digitized audio input signal $u$ by combining the digitized audio input signal $u$ with the estimated-echo signal $y$, and outputs an echo-canceled signal $e$. Echo-canceled signal $e$ may be thought of as the audio signal $u$ absent most, or all, of the echo signal, depending upon the quality of the estimated-echo signal $y$ produced by LEC 206. The echo-canceled signal $e$ feeds back to LEC 206, where it is used to adapt the digital filter coefficients of LEC 206 so that the estimated-echo signal $y$ tracks actual echo conditions. In general, the process of removing (or "canceling") an echo component from the echo-containing signal $u$ may be considered to include the LEC 206 operating in combination with summing circuit 202. Applicant's patent US 6148078 provides information related to the operation of LEC 206. As an alternative to LEC 206, an echo canceller adapted to compensate for non-linear loudspeaker behavior can be used, as described in U.S. Patents 5,680,450 arid 5,600,718 to applicant Dent.

Noise estimator 210 may process the echo-canceled signal $e$ to calculate a local background noise estimate. Noise estimator 210 should also calculate an updated or new noise estimate as appropriate, such as on a periodic basis. The update period may be based on a convenient time base associated with the wireless communications operations of mobile terminal 100.

For example, an exemplary embodiment of mobile terminal 100 operates in a digital communication system employing Time Division Multiple Access techniques (TDMA). In TDMA systems, receive and transmit operations occur only on periodic time slices, referred to as slots, as is well known in the art. TIA/EIA-136 represents an exemplary digital communications standard based on TDMA slots spaced twenty ms apart. Thus, a mobile terminal 100 incorporating the present invention and operating in a TIA/EIA-136 system, may re-compute its noise estimate every twenty ms. Of course, other time periods may be used, and the present invention may be practiced in mobile terminals 100, or other communications devices, operating according to other communications standards (e.g., IS-95, GSM), including in communications systems not employing TDMA.

Noise estimation may be based on a number of techniques. An exemplary embodiment of the present invention bases noise estimation on determining the energy of the echo-canceled signal $e$. In general, noise estimation begins with an initial noise estimate representative of a starting signal energy. The echo-canceled signal $e$ may be analyzed to determine if its current total energy exceeds the current noise estimate energy value. If so, the current noise estimate energy value is increased by a first defined amount. Conversely, If the current total energy is less than the current noise estimate energy value, the current noise estimate energy value is decreased by a second defined amount. Such technique may be termed a "trough-picker" as contrasted with a "peak-picker." Of course, this basic technique admits wide flexibility, and all such variations are considered within the scope of the present invention. A noise estimate may also be obtained as the prediction error from a vocoder using linear prediction, or the quantization error from a vocoder using vector quantization or codebooks.

Gain controller 208 receives the updated noise estimate from noise estimator 210 and determines whether its present gain setting associated with the transmit signal path requires updating. In an exemplary embodiment, gain controller 208 decreases the transmit signal gain in response to increasing noise estimates, thereby providing the desired compensation for the Lombard effect discussed above. In the embodiment illustrated in Figure 3, transmit gain adjustment is performed on the digital audio input signal after echo cancellation (i.e., the echo-canceled signal $e$), via scaling circuit 204. Further, gain controller 208 may provide receiver DSP 154 with a receive signal gain control signal, which may be used to scale the digital audio output signal $x$. In an exemplary embodiment, gain controller 208 generates the receive signal gain control signal in one-to-one inverse proportion to the transmit signal gain adjustment. However, this one-to-one inverse relationship is not required. Indeed, some embodiments of the present invention make no receive signal path gain adjustments at all.

The gain-adjusted, echo-canceled, audio input signal from scaling circuit 204 is further processed in additional processing block 212, which comprises, among other things, the speech and channel encoder operations discussed earlier. Transmitter DSP 130 provides this processed signal to modulator/RF amplifier 124, where it is used to form a transmit signal. The transmit signal is routed to antenna assembly 110 for transmission.

Notably, the embodiment illustrated in Figure 3 provides certain advantages regarding LEC 206. As LEC 206 operates on a changing input signal (audio input signal $u$), it must adapt its operation to maintain an accurate echo estimate. Indeed, as LEC 206 estimates echo based on the audio output signal $x$ from receiver DSP 154, echo cancellation effectiveness depends upon accurately modeling how this digital signal translates into the real echo signal received through microphone 172. Such modeling is based on echo path estimates, which essentially amount to LEC 206 modeling the transfer function that transforms the digital audio output signal $x$ into the input echo signal. Thus, any changes in the echo path tend to cause inaccuracies in the echo model currently being used by LEC 206. While LEC 206 operates as an adaptive echo canceller, such changes nevertheless reduce its performance until it adjusts its current echo model. Therefore, placing the transmit signal gain adjustment after the LEC 206 in the transmit signal chain, combined with placing the receive signal gain adjustment before the signal input of LEC 206, results in echo cancellation operations being essentially unaffected by gain. For example, if the receive signal gain adjustment was made directly on the analog audio output signal before the loudspeaker 168, then LEC 206 would base its echo estimate on the digital audio output signal before gain adjustment. Thus, its echo model would not incorporate the affects of gain adjustment.

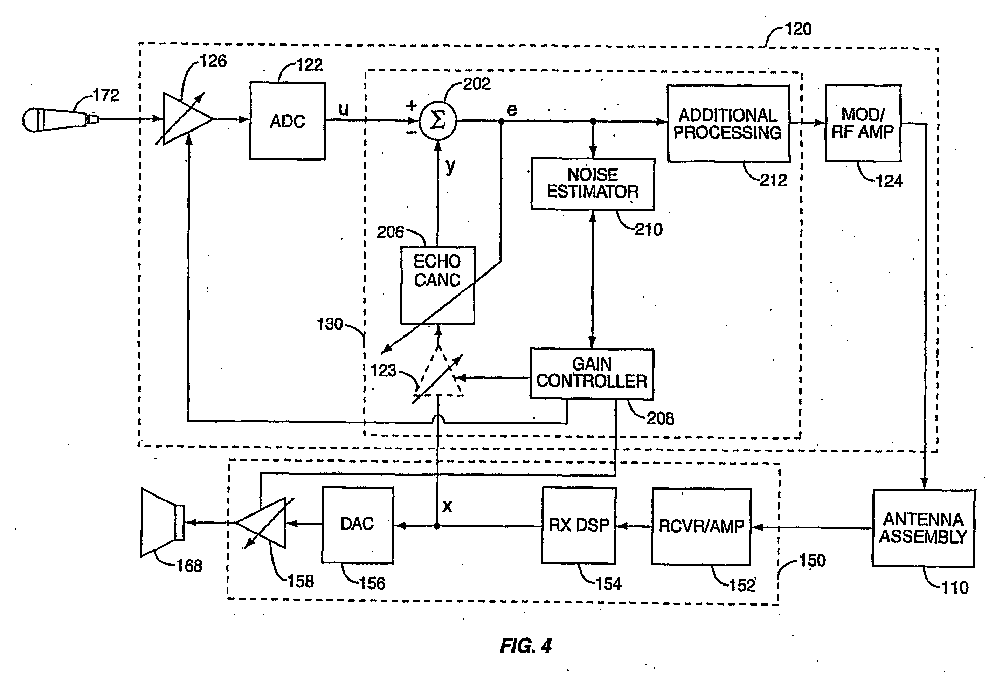

Figure 4 illustrates an alternate embodiment of the present invention distinguished from that shown in Figure 3 in two primary areas. First, transmit signal and receive signal gain adjustments are made using analog circuitry, rather than by applying scale factors to the audio input and audio output digital signal arrays. Although the embodiment illustrated in Figure 4 foregoes the echo-path gain independence discussed in the context of Figure 3 due to component tolerances, this independence may be restored by programming gain adjuster 123 with the product of the gain set by audio signal amplifier 126 and the receive gain set by adjustable-gain receiver amplifier 158. If this product is always constant, gain adjuster 123 may be omitted. This embodiment may have the advantage of better utilizing the input range of ADC 122. To illustrate this, consider that the user of the mobile terminal 100 speaks louder in the presence of increased ambient noise, but the net increase in audio input signal amplitude is mitigated by the downward gain adjustment of the adjustable-gain input audio signal amplifier 126, as controlled by gain controller 208 in response to the increase in ambient noise. As ambient noise decreases, gain controller 208 proportionately increases the gain of amplifier 126, thus providing an appropriately greater gain as the mobile terminal user decreases the volume of their voice in response to the decreasing ambient noise.

Figure 4 also illustrates gain controller 208 providing a gain control signal to an adjustable-gain receiver amplifier 158, to provide received signal path gain adjustment. As described, gain controller 208 controls the gain of receiver amplifier 158 inversely with the gain adjustments it makes to amplifier 126. Of course, the method outlined in Figure 4 can be implemented in a digital domain as well. For example, receiver DSP 154 may provide an unscaled digital audio output signal to LEC 206, while providing a scaled digital audio output signal to DAC 156, based on a control signal from gain controller 208 -- in this context, the control signal may simply be a scale factor used to multiply an array of current digital audio output values. In some embodiments, transmitter DSP 130 may incorporate scaling circuit 204 in advance of LEC 206 and associated summing circuit 202. In this manner, LEC 206 would operate on a gain-adjusted audio input signal. This configuration has the additional advantage of effectively reducing the noise input to LEC 206. This advantage arises from the fact that gain controller 208 operates scaling circuit 204 such that audio input signal gain is reduced in the presence of increased ambient noise.

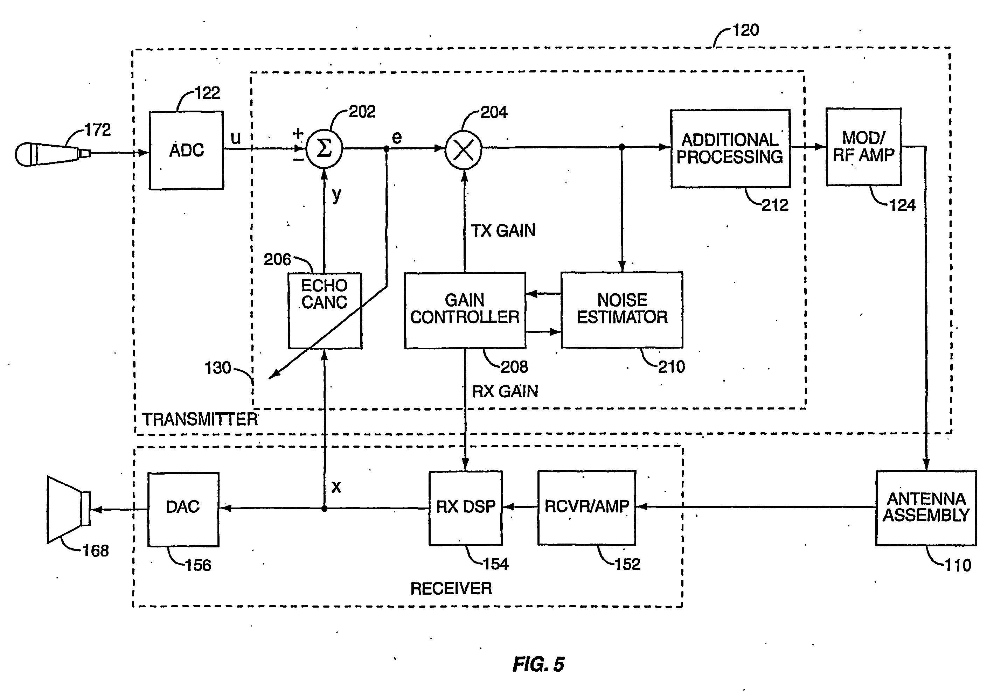

Figure 5 illustrates another optional configuration for transmitter DSP 130 wherein gain controller 208, in conjunction with scaling circuit 204, operates on the audio input signal $u$ in advance of noise estimator 210. Thus, noise estimator 210 develops a noise estimate for the echo-canceled signal $e$ after it is gain-adjusted. In this configuration, gain controller 208 provides noise estimator 210 with information relating to the current gain adjustment, so that noise estimator 210 can determine what the audio input signal ambient noise was before gain adjustment.

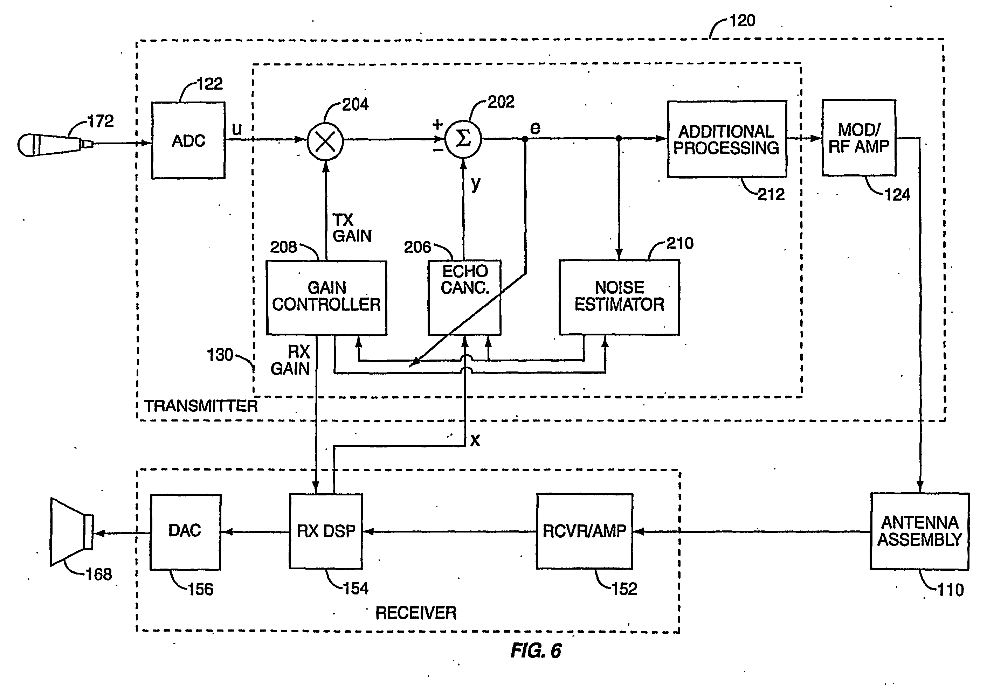

Figure 6 illustrates yet another optional configuration where gain controller 208 adjusts the gain of the audio input signal $u$ before echo cancellation and before noise estimation. As earlier noted, placing gain controller 208 before echo canceller 206 has the advantage of reducing the noise input to summing circuit 202, which may result in more effective echo cancellation. In this configuration, noise estimator 210 provides a current noise estimate to gain controller 208, and receives current gain information in return. Additionally, LEC 206 receives gain setting information either directly from gain controller 208, or from noise estimator 210, so that it may compensate its echo cancellation operations for the current gain setting.

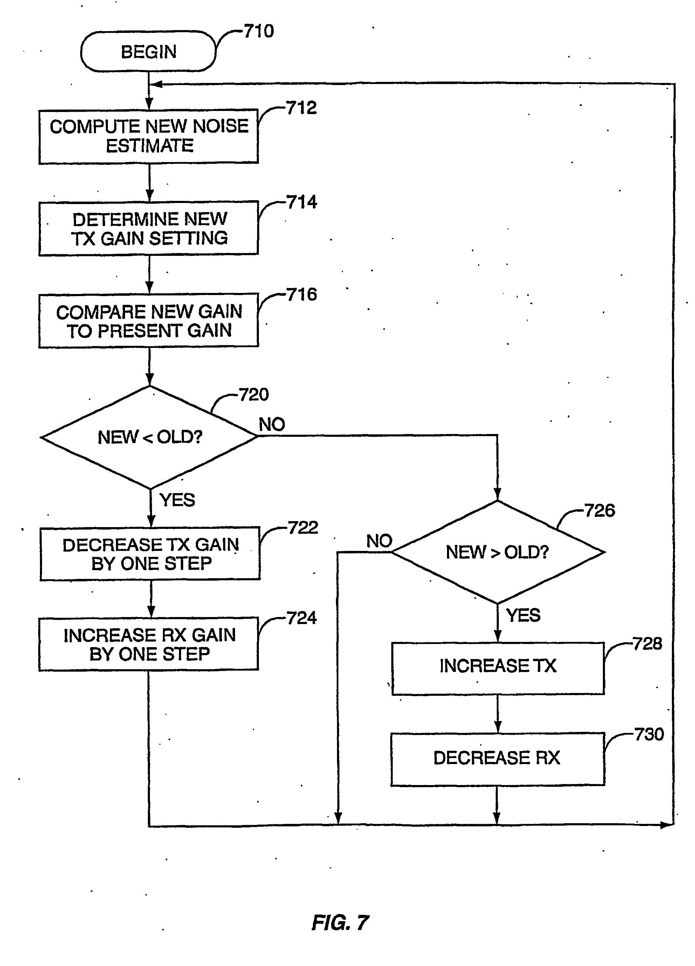

Absent precautionary measures, the automatic gain control measures contemplated in the present invention for transmit and receive signals may be obtrusive from the perspective of the mobile terminal user or remote communications device user. Thus, an exemplary embodiment for the present invention contemplates the use of a stepwise gain adjustment technique, wherein transmit signal gain is adjusted upwards or downwards in small increments until a desire gain setting is achieved. Figure 7 illustrates an incremental approach to gain adjustment. Note that the logic flow illustrated in Figure 7 represents a simplified flow diagram, and may, in fact, be part of a much more complex program flow executed by the transmitter DSP 130, or by any combination of one or all of the transmitter DSP 130, the receiver DSP 154, and the controller 102. Moreover, optional embodiments of the present invention may execute the operating logic illustrated in Figure 7 on a periodic basis.

Operation begins (710) with the computation of a new noise estimate for the audio input signal (712). A desired transmit signal gain setting is determined based on this newly computed noise estimate (714). After computing this desired transmit signal gain setting, the desired transmit gain setting is compared to a previous transmit gain setting stored in an associated memory (716). If the new desired transmit signal gain setting is less than the previous transmit signal gain setting (yes from 720), this implies the ambient noise in the environment in which mobile terminal 100 is operated has increased. Therefore, the transmit signal gain is reduced by one step, or increment (722). An exemplary embodiment of the present invention contemplates adjusting the transmit signal gain by +/- 0.4 dB every twenty milliseconds, thereby limiting the rate of gain change to a maximum of twenty dB per second. For each change in transmit signal gain (722), a corresponding but inverse step change may be made to the received signal gain (724). As noted previously herein, this corresponding change to receive signal gain offers advantages with regard to maintaining a relatively constant overall echo path loop gain, but some implementations of the present invention may be practiced with adjustments only to the transmit signal gain, or with adjustments to receive gain that are inverse to adjustments to the transmit gain. After gain adjustments, processing returns to the beginning (710) in anticipation of the next gain update cycle.

If the desired gain setting is not less than the previous gain setting (no from 720), processing continues with an evaluation of whether the desired gain setting is greater than the previous gain setting (726) (corresponding to a decreasing ambient noise situation). If so, the transmit signal gain is increased by one step, or increment (728). Correspondingly, the receive signal gain is decreased by one increment. After gain adjustments, processing returns to the beginning (710) in anticipation of the next gain update cycle. If the desired gain setting is equal to the previous gain setting, no adjustments are made (no from 720 combined with no from 726), and processing returns to the beginning (710) in anticipation of the next gain update cycle. Note that all comparisons between new and previous noise estimates, and new and previous gain settings, may incorporate a tolerance or margin to dampen or smooth gain adjustment operations.

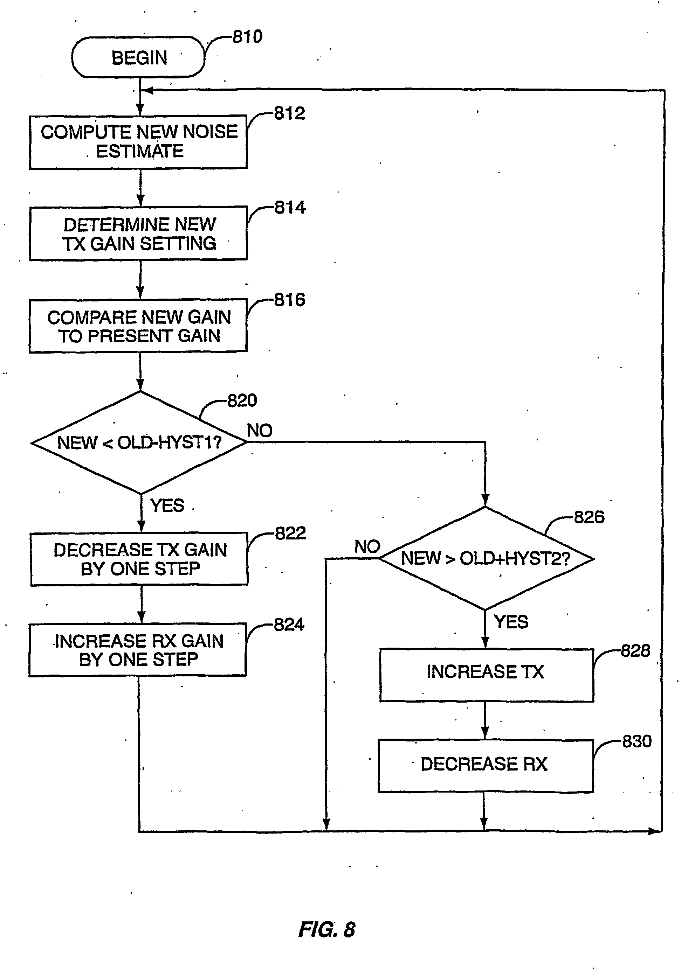

Figure 8 illustrates an alternative to the incremental gain adjustments illustrated in Fig. 7 with hysteresis protection added. Operation for blocks 810-816 illustrated in Figure 8 is identical with that of corresponding blocks 710-716 of Figure 7. However, the new desired gain setting computed in block 816 is subtracted from the present gain setting (820) to determine if the difference exceeds a first threshold-the first threshold may be determined as a design constant, or may be updated during operation. If this difference exceeds the first threshold (yes from 820), the transmit signal gain is reduced by a fixed amount (822). This fixed amount may result in setting transmit signal gain to the desired value, or may result in incrementally approaching the desired value. Corresponding, inverse gain adjustments may also be made to the receive signal gain (824). After gain adjustments, processing returns to the beginning (810) in anticipation of the next gain update cycle.

If the new desired gain setting is not less than the previous gain setting (no from 820), processing continues with an evaluation of whether the difference between the desired gain setting and the previous gain setting exceeds a second predefined threshold (826). If so (yes from 826), processing continues with the transmit signal gain being increased by a fixed amount. This fixed amount may result in the transmit signal gain equaling the desired signal gain, or approaching the desired signal gain incrementally (828). Corresponding receive signal gain adjustments are made (830), and processing returns to the beginning (810) in anticipation of the next gain update cycle. If the second threshold is not exceeded in block 826-the new desired gain setting is within the hysteresis band lying between the first and second thresholds-processing returns to the beginning (810) in anticipation of the next gain update cycle.

As another approach to hysteresis protection, the response of the noise estimator 210 may be deliberately chosen to be relatively slow.

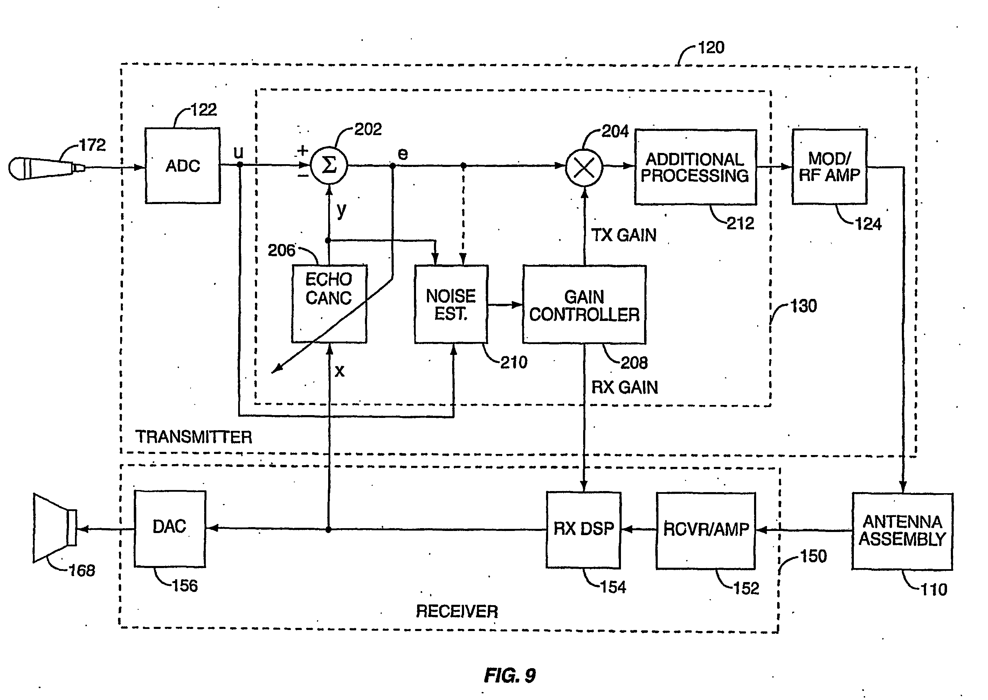

In another aspect of the present invention, the audio input noise estimates may be based on both the audio input signal $u$ and the estimated echo signal $y$ rather than on the echo-cancelled signal $e$ *per se.* For instance, the noise estimator 210 of the configuration shown in Figure 9 receives both $u$ and $y$ as inputs, but not signal $e$. The calculations internal to the noise estimator 210 are thus based on the audio input signal $u$ and the estimated echo signal $y$ output by the LEC 206. More particularly, the noise estimator 210 estimates the noise component of signal $u$ (Noise$_u$) and the noise component of signal $y$ (Noise$_y$) and then subtracts Noise$_y$ from Noise$_u$ to reach an analog to the noise estimate in signal $e$ as described above. The noise estimator 210 and other components then proceed to adjust the gain as generally described above based on this analog. In other optional configurations, the noise estimator 210 may continue to receive signal $e$ (as indicated by dash line in Figure 9), but base its noise estimate off the noise in signal $e$ (Noise$_e$) or the Noise$_u$ minus Noise$_y$, whichever is less so as to conservatively estimate noise. Thus, in these alternate configurations, the noise estimates used to adjust gain take echo cancellation into account, but optionally without directly acting based on signal $e$.

It should be noted that DSP 130, including LEC 206 and noise estimator 210, may operate in whole or in part in the time domain or the frequency domain as appropriate or desired.

The present invention admits tremendous flexibility in terms of providing noise-adaptive microphone gain (or transmit signal path gain in general). Moreover, the present invention may be practiced in a variety of communications devices, including but not limited to wireless communications mobile terminals (e.g., cellular telephones, personal digital assistants, and the like), hands-free terminals (e.g., in-car communications systems, speakerphones). Further, transmit signal adjustment discussed herein refers to gain adjustments associated with the transmit signal, with such adjustments applied anywhere in the transmit signal path, from the microphone 172 to the transmitter modulator/RF amplifier 124. For example, adjusting the amplitude of the analog signals generated by microphone 172 in response to input sound or scaling the digital values representative of the analog microphone signal both have the net effect of altering the transmit signal gain. Transmit signal gain adjustments disclosed herein therefore may operate directly on the transmit signal, or on an associated signal, such as the audio input signal, from which the transmit signal is derived, all of which are intended to be encompassed by the phrase "adjusting a gain associated with the transmit signal." Likewise, receive signal gain adjustments may operate on the receive signal anywhere in the receive signal path from receiver/amplifier 152, to loudspeaker 168. Further, as earlier stated, transmit and receive signal gain adjustments may be made in either the analog or digital domains.

By basing transmit signal path gain on audio input signal noise estimates that take echo cancellation into account, the present invention provides gain control that is not prone to generating erroneous settings based on echo signals in the input microphone signal. Gain adjustments may be made to the audio input signal before or after analog-to-digital conversion, and before or after echo cancellation. Noise estimates are derived from the audio input signal, with echo cancellation either already applied or at least taken into account, but may be made before or after transmit signal path gain adjustments.

Further, gain adjustment may optionally be made to the audio output signal (receive signal path gain) in tandem with transmit signal path gain adjustment. Preferably, receive signal gain adjustments are in inverse proportion to transmit signal gain changes, such that the overall echo path loop gain remains relatively constant. Additionally, methods transmit and receive signal path gain adjustment may be the subject of implementation variation. Gains may simply be changed from a current setting to a desired setting, or changed progressively in according to a desired linear or non-linear control function. The present embodiments are, therefore, to be considered in all respects as illustrative and not restrictive, and all changes coming within the meaning and equivalency range of the appended claims are intended to be embraced therein.

**Claims**

1. A method of controlling a communications device (100), said method comprising:

    processing a received signal to generate an audio output signal (x);
    canceling an echo component in an audio input signal (u) to produce an echo-canceled signal (e), said echo component associated with said audio output signal; the method is **characterised in that** it comprises the further steps of:

        estimating (712, 812) a first noise estimate of said audio input signal;
        generating a transmit signal based on said echo-canceled signal; and
        adjusting a first gain associated with said transmit signal based on said first noise estimate.

2. The method of claim 1 further comprising generating said audio input signal (x) based on receiving sound input at an audio transducer (172).

3. The method of claim 1 or 2 wherein said first noise estimate is a background noise component and wherein estimating said background noise component based on said echo-canceled signal (e).

4. The method of claim 3 wherein adjusting said first gain associated with said transmit signal based on said background noise component comprises adjusting said first gain oppositely to changes in said background noise component.

5. The method of claim 3 wherein estimating said background noise component of said echo-canceled signal comprises periodically determining a noise energy estimate based on a total energy value calculated for said echo-canceled signal (e).

6. The method of claim 5 wherein adjusting said first gain associated with said transmit signal based on said background noise component comprises adjusting said first gain oppositely in direction to changes in said noise energy estimate.

7. The method of claim 3 wherein adjusting said first gain associated with said transmit signal based on said background noise component comprises determining a target value for said first gain and periodically adjusting a value of said first gain over time until said value of said first gain is substantially equal to said target value.

8. The method of claim 6 wherein adjusting said first gain oppositely in direction to changes in said noise energy estimate comprises determining a target value for said first gain and increasing said first gain only if said target value is greater than a present value of said first gain by a first amount, and decreasing said first gain only if said target value is less than said present value of said first gain by a second amount.

9. The method of claim 3 further comprising adjusting a second gain associated with said received signal in tandem with adjusting said first gain.

10. The method of claim 9 wherein adjusting said second gain associated with said received signal in tandem with adjusting said first gain comprises adjusting said second gain oppositely in direction to adjustments to said first gain.

11. The method of claim 10 wherein adjusting said second gain oppositely in direction to adjustments to said first gain comprises determining a target value for said second gain based on a target value for said first gain and periodically adjusting said second gain until a value of said second gain substantially equals said target value for said second gain.

12. The method of claim 9 further comprising adjusting a third gain associated with an echo-canceller (206) based on the product of said first and second gains so as to isolate said canceling an echo component in said audio input signal (u) to produce an echo-canceled signal (e) from changes in echo gain.

13. The method of claim 3 further comprising:

   defining a background noise threshold;
   performing said adjusting said first gain associated with said transmit signal based on said estimated background noise component only if a value of said background noise component exceeds said background noise threshold.

14. The method of claim 2 further comprising

   generating an estimated echo component (y) based on said audio output signal (x); said estimated echo component representing echo present in said audio input signal (u) associated with said audio output signal;
   generating the first noise estimate based on said estimated echo component; and
   canceling the echo component in the audio input signal based on said estimated echo component.

15. The method of claim 14 wherein said first noise estimate represents noise present in said estimated echo component (y).

16. The method of claim 14 further comprising generating a second noise estimate representing background noise present in said audio input signal (u) based directly on said audio input signal and generating a third noise estimate representing noise present in said estimated echo component (y) and wherein generating said first noise estimate based on said estimated echo component comprises generating said first noise estimate based on said second noise estimate and said third noise estimate.

17. The method of claim 14 further comprising generating a fourth noise estimate representing background noise present in said audio input signal (u) based on said echo-canceled signal (e) and wherein adjusting said first gain associated with said transmit signal based on said first noise estimate comprises comparing said first noise estimate and said fourth noise estimate and using the lesser of the two to determine said gain adjustment for said transmit signal.

18. A communications device (100) comprising:

   a transmitter (120) for generating a transmit signal based on processing an echo-canceled signal (e);
   an echo-canceller (206) for producing said echo-canceled signal by reducing an echo component associated with an audio input signal (u);

   **characterised by**
   a noise estimator (210) for estimating a noise component of said audio input signal based on said echo-canceled signal;
   a gain controller (208) adapted to vary a first gain associated with said transmit signal based on said noise component.

19. The communications device of claim 18 further comprising a receiver (150) for generating an audio output signal (x) based on processing a received signal, said echo component of said audio input signal (u) associated with said audio output signal (x).

20. The communications device of claim 19 wherein said gain controller (208) is arranged to vary a second gain associated with said received signal oppositely to said first gain.

21. The communications device of claim 18 further comprising an input transducer (172) for producing the audio input signal (u) based on receiving input sounds.

22. The communications device of claim 19 further including an output signal amplifier for amplifying said audio output signal (x) and wherein said gain controller (208) is arranged to vary a second gain by varying a gain of said audio output signal amplifier oppositely to said first gain.

23. The communications device of claim 18 wherein said gain controller (208) comprises a portion of a transmit signal processor and is arranged to vary said first gain by adjusting a scale factor applied to an array of digital values representative of said audio input signal (u).

24. The communications device of claim 23 wherein said gain controller (208) is arranged to apply said scale factor to said array of digital values representative of said audio input signal (u) after said removal of said echo component.

25. The communications device of claim 23 further comprising a received signal processor (154), and wherein said gain controller (208) is arranged to vary a second gain associated with said received signal based on providing a second scale factor to said received signal processor, said second scale factor applied to an array of digital values representative of said audio output signal (x).

26. The communications device of claim 18 wherein said gain controller (208) is arranged to vary said first gain oppositely to changes in said noise component.

27. The communications device of claim 26 wherein said gain controller (208) further is arranged to vary a second gain associated with said received signal oppositely to said varying of said first gain.

**Patentansprüche**

1. Verfahren zur Steuerung einer Kommunikationsvorrichtung (100), wobei das Verfahren enthält:

   Verarbeiten eines empfangenen Signals, um ein Audio-Ausgangssignal (x) zu erzeugen;

   Beseitigen einer Echo-Komponente in einem Audio-Eingangssignal (u), um ein von Echo befreites Signal (e) zu erzeugen, wobei die Echo-Komponente mit dem Audio-Ausgangssignal in Beziehung steht; wobei das Verfahren **dadurch gekennzeichnet ist, dass** es die Schritte umfasst:

   Abschätzen (712, 812) einer ersten Rauschabschätzung des Audio-Eingangssignals;

   Erzeugen eines Sendesignals basierend auf dem von Echo befreiten Signal; und

   Einstellen einer ersten Verstärkung, die mit dem Sendesignal in Beziehung steht, basierend auf der ersten Rauschabschätzung.

2. Verfahren nach Anspruch 1, außerdem mit dem Erzeugen eines Audio-Eingangssignals (x), basierend auf einem empfangenen Geräuscheingang an einem Audio-Wandler (172).

3. Verfahren nach Anspruch 1 oder 2, bei dem die erste Rauschabschätzung eine Hintergrundrauschkomponente ist und das Abschätzen der Hintergrundrauschkomponente auf dem von Echo befreiten Signal (e) basiert.

4. Verfahren nach Anspruch 3, bei dem das Einstellen der ersten Verstärkung, die mit dem Sendesignal in Beziehung steht, basierend auf der Hintergrundrauschkomponente, das Einstellen der ersten Verstärkung entgegengerichtet zu Veränderungen in der Hintergrundrauschkomponente umfasst.

5. Verfahren nach Anspruch 3, bei dem das Abschätzen der Hintergrundrauschkomponente des von Echo befreiten Signals das periodische Bestimmen einer Rauschenergieabschätzung basierend auf einem Gesamtenergiewert umfasst, der für das von Echo befreite Signal (e) berechnet ist.

6. Verfahren nach Anspruch 5, bei dem das Einstellen der ersten Verstärkung, die mit dem Sendesignal in Beziehung steht, basierend auf der Hintergrundrauschkomponente, das Einstellen der ersten Verstärkung entgegengerichtet zu Veränderungen in der Rauschenergieabschätzung umfasst.

7. Verfahren nach Anspruch 3, bei dem das Einstellen der ersten Verstärkung, die mit dem Sendesignal in Beziehung steht, basierend auf der Hintergrundräuschkomponente, das Bestimmen eines Zielwertes für die erste Verstärkung und das periodische Einstellen eines Wertes der ersten Verstärkung über die Zeit umfasst, bis dieser Wert der ersten Verstärkung im wesentlichen gleich dem Zielwert ist.

**8.** Verfahren nach Anspruch 6, bei dem das Einstellen der ersten Verstärkung entgegengerichtet zu Veränderungen in der Rauschenergieabschätzung das Bestimmen eines Zielwertes für die erste Verstärkung und das Erhöhen der ersten Verstärkung, und zwar nur dann, wenn der Zielwert um einen ersten Wert größer ist als der aktuelle Wert der ersten Verstärkung, und Vermindern der ersten Verstärkung umfasst, und zwar nur dann, wenn der Zielwert um eine zweiten Wert kleiner ist als der aktuelle Wert der ersten Verstärkung.

**9.** Verfahren nach Anspruch 3, außerdem mit dem Einstellen einer zweiten Verstärkung, die mit dem Empfangssignal in Beziehung steht, zusammen mit dem Einstellen der ersten Verstärkung.

**10.** Verfahren nach Anspruch 9, bei dem das Einstellen der zweiten Verstärkung, die mit dem Empfangssignal in Beziehung steht, zusammen mit der Einstellung der ersten Verstärkung das Einstellen der zweiten Verstärkung entgegengerichtet zu Veränderungen der ersten Verstärkung umfasst.

**11.** Verfahren nach Anspruch 10, bei dem das Einstellen der zweiten Verstärkung entgegengerichtet zu Einstellungen der ersten Verstärkung das Bestimmen eines Zielwertes für die zweite Verstärkung, basierend auf einem Zielwert für die erste Verstärkung, und das periodische Einstellen der zweiten Verstärkung umfasst, bis ein Wert der zweiten Verstärkung im wesentlichen gleich dem Zielwert für die zweite Verstärkung ist.

**12.** Verfahren nach Anspruch 9, außerdem mit dem Einstellen einer dritten Verstärkung, die mit einem Echo-Beseitigungsmittel (206) in Beziehung steht, basierend auf dem Produkt der ersten und der zweiten Verstärkung, um so das Beseitigen einer Echo-Komponente in dem Audio-Ausgangssignal (u) zu isolieren, um ein von Echo befreites Signal (e) aus Veränderungen in der Echo-Verstärkung zu erzeugen.

**13.** Verfahren nach Anspruch 3, außerdem mit:

Definieren eines Grenzwertes des Hintergrundrauschens;

Durchführen der Einstellung der ersten Verstärkung, die mit dem Sendesignal in Beziehung steht, basierend auf der geschätzten Hintergrundrauschkomponente, und zwar nur dann, wenn ein Wert der Hintergrundrauschkomponente den Grenzwert des Hintergrundrauschens übersteigt.

**14.** Verfahren nach Anspruch 2, außerdem mit:

Erzeugen einer geschätzten Echo-Komponente (y) basierend auf dem Audio-Ausgangssignal (x); wobei die geschätzte Echo-Komponente ein Echo darstellt, das in dem Audio-Eingangssignal (u) vorhanden ist, das mit Audio-Ausgangssignal in Beziehung steht;

Erzeugen der ersten Rauschabschätzung basierend auf der geschätzten Echo-Komponente; und

Beseitigen der Echo-Komponente in dem Audio-Eingangssignal basierend auf der geschätzten Echo-Komponente.

**15.** Verfahren nach Anspruch 14, bei dem die erste Rauschabschätzung Rauschen darstellt, das in der geschätzten Echo-Komponente (y) vorhanden ist.

**16.** Verfahren nach Anspruch 14, außerdem mit dem Erzeugen einer zweiten Rauschabschätzung, die Hintergrundrauschen darstellt, das in dem Audio-Eingangssignal (u) vorhanden ist, direkt basierend auf den Audio-Eingangssignal, und Erzeugen einer dritten Rauschabschätzung, die Rauschen darstellt, das in der geschätzten Echo-Komponente (y) vorhanden ist, und bei dem das Erzeugen der ersten Rauschabschätzung, basierend auf der geschätzten Echo-Komponente, das Erzeugen der ersten Rauschabschätzung basierend auf der zweiten Rauschabschätzung und der dritten Rauschabschätzung umfasst.

**17.** Verfahren nach Anspruch 14, außerdem mit dem Erzeugen einer vierten Rauschabschätzung, die Hintergrundrauschen darstellt, das in dem Audio-Eingangssignal (u) vorhanden ist, basierend auf dem von Echo befreiten Signal (e), und bei dem das Einstellen der ersten Verstärkung, die mit dem Sendesignal in Beziehung steht, basierend auf der ersten Rauschabschätzung, das Vergleichen der ersten Rauschabschätzung und der vierten Rauschabschätzung sowie das Verwenden der kleineren der beiden beinhaltet, um die Verstärkungseinstellung für das Sendesignal zu bestimmen.

**18.** Kommunikationsvorrichtung (100), mit:

einem Sender (120) zum Erzeugen eines Sendesignals basierend auf dem Verarbeiten eines von Echo befreiten Signals (e);

einem Echo-Beseitigungsmittel (206) zum Erzeugen des von Echo befreiten Signals durch Reduzieren einer Echo-Komponente, die mit einem Audio-Eingangssignal (u) in Beziehung steht;

**gekennzeichnet durch**

ein Rauschabschätzmittel (210) zum Abschätzen einer Rauschkomponente des Audio-Eingangssignals basierend auf dem von Echo befreiten Signal;
eine Verstärkungssteuerung (208), die dazu ausgestaltet ist, um eine erste Verstärkung zu variieren, die mit dem Sendesignal in Beziehung steht, basierend auf der Rauschkomponente.

**19.** Kommunikationsvorrichtung nach Anspruch 18, außerdem mit einem Empfänger (150) zum Erzeugen eines Audio-Ausgangssignals (x), basierend auf dem Verarbeiten eines empfangenen Signals, wobei die Echo-Komponente des Audio-Eingangssignals (u) mit dem Audio-Ausgangssignal (x) in Beziehung steht.

**20.** Kommunikationsvorrichtung nach Anspruch 19, bei der die Verstärkungssteuerung (208) dazu ausgestaltet ist, um eine zweite Verstärkung zu variieren, die mit dem Empfangssignal in Beziehung steht, und zwar entgegengerichtet zur ersten Verstärkung.

**21.** Kommunikationsvorrichtung nach Anspruch 18, außerdem mit einem Eingangs-Wandler (172) zum Erzeugen des Audio-Eingangssignals (u), und zwar basierend auf empfangenen Eingangsgeräuschen.

**22.** Kommunikationsvorrichtung nach Anspruch 19, außerdem mit einem Ausgangssignalverstärker zum Verstärken des Audio-Ausgangssignals (x), wobei die Verstärkungssteuerung (208) dazu ausgestaltet ist, um eine zweite Verstärkung zu variieren, indem eine Verstärkung des Audio-Ausgangssignalverstärkers entgegengerichtet zur ersten Verstärkung variiert wird.

**23.** Kommunikationsvorrichtung nach Anspruch 18, bei der die Verstärkungssteuerung (208) einen Teil von einem Sendesignalprozessor aufweist und dazu ausgestaltet ist, um die erste Verstärkung zu variieren, indem ein Skalierungsfaktor eingestellt wird, der auf ein Array von digitalen Werten angewendet wird, die das Audio-Eingangssignal (u) darstellen.

**24.** Kommunikationsvorrichtung nach Anspruch 23, bei der die Verstärkungssteuerung (208) dazu ausgestaltet ist, um den Skalierungsfaktor auf das Array von digitalen Werten anzuwenden, die das Audio-Eingangssignal (u) darstellen, und zwar nach dem Entfernen der Echo-Komponente.

**25.** Kommunikationsvorrichtung nach Anspruch 23, außerdem mit einem Empfangssignalprozessor (154), wobei die Verstärkungssteuerung (208) dazu ausgestaltet ist, um eine zweite Verstärkung zu variieren, die mit dem empfangenen Signal in Beziehung steht, basierend auf dem Bereitstellen eines zweiten Skalierungsfaktors für den Empfangssignalprozessor, wobei der zweite Skalierungsfaktor auf ein Array von digitalen Werten angewendet wird, die das Audio-Ausgangssignal (x) darstellen.

**26.** Kommunikationsvorrichtung nach Anspruch 18, bei der die Verstärkungssteuerung (208) dazu ausgestaltet ist, um die erste Verstärkung entgegengerichtet zu Veränderungen in der Rauschkomponente zu variieren.

**27.** Kommunikationsvorrichtung nach Anspruch 26, bei der die Verstärkungssteuerung (208) außerdem dazu ausgestaltet ist, um eine zweite Verstärkung zu variieren, die mit dem Empfangssignal in Beziehung steht, und zwar entgegengerichtet zur Veränderung der ersten Verstärkung.


**Revendications**

**1.** Procédé de commande d'un dispositif de communications (100), ledit procédé comprend les étapes consistant à :

traiter un signal reçu pour générer un signal de sortie audio (x) ;

supprimer une composante d'écho dans un signal d'entrée audio (u) pour produire un signal dont l'écho est supprimé (e), ladite composante d'écho associée audit signal de sortie audio, le procédé est **caractérisé en ce qu'**il comprend de plus les étapes consistant à :

> estimer (712, 812) une première estimation de bruit dudit signal d'entrée audio ;
> générer un signal de transmission sur la base dudit signal dont l'écho est supprimé ; et
> régler un premier gain associé audit signal de transmission sur la base de ladite première estimation de bruit.

**2.** Procédé selon la revendication 1, comprenant de plus l'étape qui consiste à générer ledit signal d'entrée audio (x) sur la base de la réception de l'entrée sonore sur un transducteur audio (172).

**3.** Procédé selon la revendication 1 ou 2, dans lequel ladite première estimation de bruit est une composante de bruit de fond et dans lequel l'estimation de ladite composante de bruit de fond est sur la base dudit signal dont l'écho est supprimé (e).

**4.** Procédé selon la revendication 3, dans lequel le réglage dudit premier gain associé audit signal de transmission sur la base de ladite composante de bruit de fond comprend l'étape qui consiste à régler un premier gain inversement aux modifications dans ladite composante de bruit de fond.

**5.** Procédé selon la revendication 3, dans lequel l'estimation de ladite composante de bruit de fond dudit signal dont l'écho est supprimé comprend l'étape qui consiste à déterminer périodiquement une estimation de l'énergie de bruit sur la base d'une valeur d'énergie totale calculée pour ledit signal dont l'écho est supprimé (e).

**6.** Procédé selon la revendication 5, dans lequel le réglage dudit premier gain associé audit signal de transmission sur la base de ladite composante de bruit de fond comprend l'étape qui consiste à régler un premier gain dans le sens inverse aux modifications dans ladite estimation de l'énergie de bruit.

**7.** Procédé selon la revendication 3, dans lequel le réglage dudit premier gain associé audit signal de transmission sur la base de ladite composante de bruit de fond comprend l'étape qui consiste à déterminer une valeur cible pour ledit premier gain et à régler périodiquement une valeur dudit premier gain en fonction du temps jusqu'à ce que ladite valeur dudit premier gain soit fondamentalement égale à ladite valeur cible.

**8.** Procédé selon la revendication 6, dans lequel le réglage dudit premier gain dans le sens inverse aux modifications dans ladite estimation de l'énergie de bruit comprend l'étape qui consiste à déterminer une valeur cible pour ledit premier gain et à augmenter ledit premier gain uniquement si ladite valeur cible est supérieure à une valeur actuelle dudit premier gain d'un premier montant et à diminuer ledit premier gain uniquement si ladite valeur cible est inférieure à ladite valeur actuelle dudit premier gain d'un deuxième montant.

**9.** Procédé selon la revendication 3, comprenant de plus l'étape qui consiste à régler un deuxième gain associé audit signal reçu en tandem avec le réglage dudit premier gain.

**10.** Procédé selon la revendication 9, dans lequel le réglage dudit deuxième gain associé audit signal reçu en tandem avec le réglage dudit premier gain comprend l'étape qui consiste à régler ledit deuxième gain dans le sens inverse aux réglages dudit premier gain.

**11.** Procédé selon la revendication 10, dans lequel le réglage dudit deuxième gain dans le sens inverse aux réglages dudit premier gain comprend l'étape qui consiste à déterminer une valeur cible pour ledit deuxième gain sur la base d'une valeur cible pour ledit premier gain et à régler périodiquement ledit deuxième gain jusqu'à ce qu'une valeur dudit deuxième gain soit fondamentalement égale à ladite valeur cible pour ledit deuxième gain.

**12.** Procédé selon la revendication 9, comprenant de plus l'étape qui consiste à régler un troisième gain associé à un suppresseur d'écho (206) sur la base du produit desdits premier et deuxième gains de manière à isoler ladite suppression d'une composante d'écho dans ledit signal d'entrée audio (u) pour produire un signal dont l'écho est supprimé (e) à partir des modifications dans le gain d'écho.

**13.** Procédé selon la revendication 3, comprenant de plus les étapes qui consistent à :

définir un seuil de bruit de fond ;

réaliser ledit réglage dudit premier gain associé audit signal de transmission sur la base de ladite composante de bruit de fond estimée uniquement si une valeur de ladite composante de bruit de fond dépasse le seuil de bruit de fond.

**14.** Procédé selon la revendication 2, comprenant de plus les étapes qui consistent à :

générer une composante d'écho estimée (y) sur la base dudit signal de sortie audio (x), ladite composante d'écho estimée représentant l'écho présent dans ledit signal d'entrée audio (u) associé audit signal de sortie audio ;

générer la première estimation de bruit sur la base de ladite composante d'écho estimée ; et à

supprimer la composante d'écho dans le signal d'entrée audio sur la base de ladite composante d'écho estimée.

**15.** Procédé selon la revendication 14, dans lequel ladite la première estimation de bruit représente le bruit présent dans ladite composante d'écho estimée (y).

**16.** Procédé selon la revendication 14, comprenant de plus les étapes qui consistent à générer une deuxième estimation de bruit représentant le bruit de fond présent dans ledit signal d'entrée audio (u) directement sur la base dudit signal d'entrée audio et à générer une troisième estimation de bruit représentant le bruit présent dans ladite composante d'écho estimée (y), et dans lequel la génération de ladite première estimation de bruit sur la base de ladite composante d'écho estimée comprend l'étape qui consiste à générer ladite première estimation de bruit sur la base de ladite deuxième estimation de bruit et de ladite troisième estimation de bruit.

**17.** Procédé selon la revendication 14, comprenant de plus l'étape qui consiste à générer une quatrième estimation de bruit représentant le bruit de fond présent dans ledit signal d'entrée audio (u) sur la base dudit signal dont l'écho est supprimé (e) et dans lequel le réglage dudit premier gain associé audit signal de transmission sur la base de ladite première estimation de bruit comprend la comparaison de ladite première estimation de bruit et de ladite quatrième estimation de bruit et l'utilisation de la moindre des deux pour déterminer ledit réglage de gain pour ledit signal de transmission.

**18.** Dispositif de communications (100) comprenant :

un émetteur (120) pour générer un signal de transmission sur la base du traitement d'un signal dont l'écho est supprimé (e) ;

un suppresseur d'écho (206) pour produire ledit signal dont l'écho est supprimé en réduisant une composante d'écho associée à un signal d'entrée audio (u) ;

**caractérisé par** :

un estimateur de bruit (210) servant à estimer une composante de bruit dudit signal d'entrée audio sur la base dudit signal dont l'écho est supprimé ;

un contrôleur de gain (208) adapté pour faire varier un premier gain associé audit signal de transmission sur la base de ladite composante de bruit.

**19.** Dispositif de communications selon la revendication 18, comprenant de plus un récepteur (150) servant à générer un signal de sortie audio (x) sur la base du traitement d'un signal reçu, ladite composante d'écho dudit signal d'entrée audio (u) étant associée audit signal de sortie audio (x).

**20.** Dispositif de communications selon la revendication 19, dans lequel ledit contrôleur de gain (208) est agencé pour faire varier un deuxième gain associé audit signal reçu dans le sens inverse du premier gain.

**21.** Dispositif de communications selon la revendication 18, comprenant de plus un transducteur d'entrée (172) servant à produire le signal d'entrée audio (u) sur la base de la réception de sons d'entrée.

**22.** Dispositif de communications selon la revendication 19, comprenant de plus un amplificateur de signal de sortie servant à amplifier ledit signal de sortie audio (x) et dans lequel ledit contrôleur de gain (208) est agencé pour faire varier un deuxième gain en faisant varier un gain dudit amplificateur de signal de sortie audio dans le sens inverse dudit premier gain.

23. Dispositif de communications selon la revendication 18, dans lequel ledit contrôleur de gain (208) comprend une partie d'un processeur de signal de transmission et est agencé pour faire varier ledit premier gain en réglant un facteur d'échelle appliqué à un ensemble de valeurs numériques représentatives dudit signal d'entrée audio (u).

24. Dispositif de communications selon la revendication 23, dans lequel ledit contrôleur de gain (208) est agencé pour appliquer ledit facteur d'échelle audit ensemble de valeurs numériques représentatives dudit signal d'entrée audio (u) après la suppression de ladite composante d'écho.

25. Dispositif de communications selon la revendication 23, comprenant de plus un processeur de signal reçu (154) et dans lequel ledit contrôleur de gain (208) est agencé pour faire varier un deuxième gain associé audit signal reçu sur la base de la fourniture d'un deuxième facteur d'échelle audit processeur de signal reçu, ledit deuxième facteur d'échelle étant appliqué à un ensemble de valeurs numériques représentatives dudit signal de sortie audio (x).

26. Dispositif de communications selon la revendication 18, dans lequel ledit contrôleur de gain (208) est agencé pour faire varier ledit premier gain dans le sens inverse des changements dans ladite composante de bruit.

27. Dispositif de communications selon la revendication 26, dans lequel ledit contrôleur de gain (208) est de plus agencé pour faire varier un deuxième gain associé audit signal reçu dans le sens inverse de ladite variation dudit premier gain.

**FIG. 1**

EP 1 282 978 B1

*FIG. 2*

*FIG. 3*

EP 1 282 978 B1

**FIG. 4**

FIG. 5

*FIG. 6*

**FIG. 7**

*FIG. 8*

**FIG. 9**

EP 1 282 978 B1